# EUROPEAN PATENT APPLICATION

(11) **EP 4 230 435 A1**
(43) Date of publication of application: **23.08.2023**
(21) Application number: 21880185.0
(22) Date of filing: 14.10.2021
(51) Int. Cl.: B60C 1/00, C08C 19/25, C08K 5/103, C08K 5/17, C08K 5/20, C08L 15/00, C08K 3/34, C08K 3/36

(54) **RUBBER BALE, PRODUCTION METHOD THEREFOR, POLYMER COMPOSITION, CROSSLINKED OBJECT, AND TIRE**

(30) Priority: 16.10.2020 JP 2020174575
(71) Applicant: ENEOS Materials Corporation, Tokyo 105-0021 (JP)
(72) Inventor: KUWABARA, Rikimaru, Tokyo 105-8640 (JP)
(74) Representative: TBK
(86) International application number: PCT/JP2021/038055
(87) International publication number: WO 2022/080450

(57) **Abstract**

Provided is a rubber bale containing a modified conjugated diene-based polymer and a surfactant having HLB of 9.0 or less. The rubber bale is produced by a method including a mixing step of mixing a polymer solution containing a modified conjugated diene-based polymer dissolved in a solvent and a surfactant having HLB of 9.0 or less and a desolvation step of removing the solvent from a solution obtained by the mixing step.

## Description

### Cross-reference to related applications

The present application is based on Japanese Patent Application No. 2020-174575, filed on October 16, 2020, and thus the content thereof is incorporated herein by reference.

### Technical Field

The present disclosure relates to a rubber bale, a production method therefor, a polymer composition, a crosslinked product, and a tire.

Conjugated diene-based polymers that are obtained by polymerization using a conjugated diene compound are favorable in terms of a variety of characteristics such as heat resistance, wear resistance, mechanical strength and moldability and are thus widely used in a variety of industrial products such as pneumatic tires, anti-vibration rubber and hoses. For example, it is known that a reinforcing agent such as carbon black or silica is, together with a conjugated diene-based polymer, blended with a polymer composition that is used for the production of treads, sidewalls and the like of pneumatic tires in order to improve the durability or wear resistance of products.

As the conjugated diene-based polymer, a variety of modified conjugated diene-based polymers in which a functional group that interacts with silica has been introduced into a terminal or main chain of a conjugated diene-based polymer chain have been proposed in order to obtain tires having superior low fuel consumption performance. Modified conjugated diene-based polymers are more compatible with a reinforcing filler such as carbon black or silica than unmodified conjugated diene-based polymers and are thus capable of improving low fuel consumption performance by suppressing the generation of heat in tire uses.

In addition, conventionally, in order to further improve tire characteristics such as low fuel consumption performance, it has been proposed to blend an additive with a conjugated diene-based polymer (see Patent Document 1 and Patent Document 2). Patent Document 1 discloses that a dispersant such as bis(2-hydroxyethylisotridecyloxypropylamine is blended with a modified conjugated diene-based polymer. In addition, Patent Document 2 discloses that silica dispersibility is improved by producing a rubber bale by adding a nonionic surfactant such as di(polyoxyethylene) stearyl amine to a modified or unmodified conjugated diene-based polymer.

### Prior Art Document

### Patent Document

Patent Document 1: Japanese *Kohyo* (PCT) Patent Publication No. JP-T-2017-508841
Patent Document 2: Japanese Patent Application Publication (KOKAI) No. 2019-182996

### Summary of Invention

### Technical Problem

However, as a result of the present inventors' studies, in a case where an additive is blended with a conjugated diene-based polymer as in Patent Document 1 or Patent Document 2, a disadvantage of the deterioration of scorch properties is caused. As a polymer composition, there has been a demand for a technique for obtaining a crosslinked product having excellent low fuel consumption performance while suppressing the deterioration of scorch resistance and processability.

The present disclosure has been made in consideration of the above-described problem and a main objective of the present disclosure is to provide a rubber bale enabling the obtainment of a crosslinked product being excellent in terms of processability and scorch resistance and, furthermore, having excellent low fuel consumption performance.

### Solution to Problem

The present inventors have carried out intensive studies to solve the above-described problem of the related art. As a result, they have found that the above-described problem can be solved by obtaining a rubber bale by adding a specific additive substance to a modified conjugated diene-based polymer. Specifically, the following means is provided by the present disclosure.
[1] A rubber bale contains a modified conjugated diene-based polymer and a surfactant having HLB of 9.0 or less.
[2] A method for producing a rubber bale includes: a mixing step of mixing a polymer solution comprising a modified conjugated diene-based polymer dissolved in a solvent and a surfactant having HLB of 9.0 or less; and a desolvation step of removing the solvent from a solution obtained by the mixing step.
[3] A polymer composition that the rubber bale of the above-described [1] is blended with at least one reinforcing filler selected from the group consisting of silica, carbon black and an inorganic compound represented by formula (4):

   nM¹-mSiOₖ-iH₂O ... (4)

   wherein M¹ is at least one selected from the group consisting of a specific metal that is any of aluminum, magnesium, titanium and calcium, an oxide of the specific metal, a hydroxide of the specific metal, a hydrate of an oxide of the specific metal and a hydrate of a hydroxide of the specific metal; n is an integer of 1 to 5; m is an integer of 0 to 10; k is an integer of 2 to 5; and i is an integer of 0 to 10.
[4] A crosslinked product that is obtained using the polymer composition of the above-described [4].
[5] A tire, wherein either or both of a tread and a sidewall are formed of the polymer composition of the above-described [4].

### Advantageous Effect of Invention

According to the present disclosure, it is possible to produce a rubber bale enabling the obtainment of a rubber compact being excellent in terms of processability and scorch resistance and having excellent low rolling resistance.

### Description of Embodiments

Hereinafter, items relating to carrying out the present disclosure will be described in detail. In the present specification, numerical ranges expressed using "to" indicate that the numerical values before and after "to" are included as the lower limit value and the upper limit value.

### <<Rubber Bale>>

A rubber bale of the present disclosure is obtained by the compression molding of synthetic rubber, which is a material of a rubber product and is, for example, a cuboid-shaped lump. A variety of additives are blended and kneaded with this rubber bale, and, furthermore, a step of molding, vulcanization or the like is carried out thereon, whereby a rubber product is produced in the end. The rubber bale of the present disclosure contains a modified conjugated diene-based polymer and a surfactant having HLB of 9.0 or less. Hereinafter, each component that is contained in the rubber bale will be described while describing a method for producing the rubber bale.

The rubber bale of the present disclosure is preferably produced by a method including the following steps.

Polymerization step: A step of polymerizing monomers containing a conjugated diene compound in the presence of a polymerization initiator to obtain a conjugated diene-based polymer having an active terminal.

Modification step: A step of reacting the active terminal of the conjugated diene-based polymer obtained by the polymerization and a compound having a hydrocarbyloxysilyl group and a nitrogen-containing group (hereinafter, also referred to as "terminal modifying agent") .

Mixing step: A step of mixing a polymer solution containing the modified conjugated diene-based polymer dissolved in a solvent and a surfactant.

Desolvation step: A step of removing the solvent from a solution containing the modified conjugated diene-based polymer and the surfactant.

Hereinafter, each step will be described in detail.

### <Polymerization Step>

### (Conjugated Diene Compound)

Examples of a conjugated diene compound that is used in polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, 2-chloro-1,3-butadiene and the like. Among these, 1,3-butadiene, isoprene and 2,3-dimethyl-1,3-butadiene are preferable, and, due to a strong effect of improving processability and reduction of hysteresis losses in a balanced manner, 1,3-butadiene is particularly preferable. As the conjugated diene compound, one conjugated diene compound can be used singly or two or more conjugated diene compounds can be used in combination.

A conjugated diene-based polymer may be a homopolymer for which the conjugated diene compound is used, and is preferably a copolymer having a structural unit derived from the conjugated diene compound and a structural unit derived from an aromatic vinyl compound from the viewpoint of increasing the strength of rubber. Examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, vinylxylene, vinylnaphthalene, vinylpyridine, diphenylethylene, tertiary amino group-containing diphenylethylene (for example, 1-(4-N,N-dimethylaminophenyl)-1-phenylethylene) and the like. As the aromatic vinyl compound, among these, styrene and α-methylstyrene are preferable.

In a case where a copolymer of the conjugated diene compound and the aromatic vinyl compound is produced as the conjugated diene-based polymer that is produced in the polymerization step, the conjugated diene-based polymer is preferably a copolymer having a structural unit derived from 1,3-butadiene and a structural unit derived from styrene from the viewpoint of livingness in anionic polymerization. This copolymer is preferably a random copolymer of the conjugated diene compound and the aromatic vinyl compound. The random copolymer may further have a block portion composed of the conjugated diene compound or a different aromatic vinyl compound.

The proportion of the aromatic vinyl compound used is preferably set to 3 to 55 mass% and more preferably set to 5 to 50 mass% relative to the total amount of monomers that are used for the polymerization from the viewpoint of well-balanced low-hysteresis loss characteristics (low fuel consumption performance) and wet skid resistance and improvement in wear resistance of the obtained crosslinked product. The content proportion of the structural unit derived from the aromatic vinyl compound in the polymer is a value measured by ¹H-NMR.

Upon the polymerization, a compound other than the conjugated diene compound and the aromatic vinyl compound (hereinafter, also referred to as "additional monomer") may be used as a monomer. Examples of the additional monomer include acrylonitrile, methyl (meth)acrylate, ethyl (meth)acrylate and the like. In the case of using the additional monomer, the proportion of the additional monomer used is preferably set to 5 mass% or less and more preferably 3 mass% or less relative to the total amount of the monomers that are used in the polymerization.

As a polymerization method, a solution polymerization method is particularly preferable. As the polymerization type, any of a batch type and a continuous type may be used. In the case of using the solution polymerization method, specific examples of the polymerization method include a method in which monomers are polymerized in an organic solvent in the presence of a polymerization initiator and a randomizer, which is used as necessary.

The polymerization initiator includes an alkali metal compound or an alkali earth metal compound. Specific examples thereof include alkyl lithium, 1,4-dilithiobutane, phenyllithium, stilbene lithium, naphthyllithium, 1,3-bis(1-lithio-1,3-dimethylpentyl)benzene, 1,3-phenylenebis(3-methyl-1-phenyl pentylidene)dilithium, naphthyl sodium, naphthyl potassium, di-n-butylmagnesium, di-n-hexylmagnesium, ethoxypotassium, calcium stearate and the like. Examples of the alkyl lithium include methyllithium, ethyllithium, n-propyllithium, n-butyllithium, sec-butyllithium, t-butyllithium and the like. As the alkali metal compound and the alkali earth metal compound, among these, lithium compounds are preferable. Upon the polymerization, the proportions of the alkali metal compound and the alkali earth metal compound used (the total amount in a case where two or more compounds are used) are preferably set to 0.2 to 20 mmol relative to 100 g of the monomers that are used for the polymerization.

In the polymerization reaction, as the polymerization initiator, a metal amide compound that is obtained by mixing an alkali metal compound or an alkali earth metal compound and a compound having a functional group that interacts with silica (hereinafter, also referred to as "initiating modifying agent") may be used. When monomers are polymerized in the presence of such a metal amide compound, it is possible to introduce the functional group derived from the initiating modifying agent into a polymerization initiation terminal of the conjugated diene-based polymer.

Here, the term "the functional group that interacts with silica" in the present specification means a group having an element that interacts with silica such as nitrogen, sulfur, phosphorus or oxygen. The term "interaction" means the formation of a covalent bond between molecules or the formation of an intermolecular force that is weaker than a covalent bond (for example, an electromagnetic force that acts between molecules such as an ion-dipole interaction, a dipole-dipole interaction, a hydrogen bond or Van Der Waals force).

The initiating modifying agent is preferably a nitrogen-containing compound such as a secondary amine compound. Specific examples of the nitrogen-containing compound include chain amines such as dimethylamine, diethylamine, dipropylamine, dibutylamine, dodecamethyleneimine, N,N'-dimethyl-N'-trimethylsilyl-1,6-diaminohexane, di-(2-ethylhexyl)amine and diallylamine; cyclic amines such as piperidine, pyrrolidine, hexamethyleneimine, heptamethyleneimine, dicyclohexylamine, N-methylbenzylamine, morpholin, N-(trimethylsilyl)piperazine, N-(tertbutyldimethylsilyl)piperazine and 1,3-ditrimethylsilyl-1,3,5-triazinane.

In the case of polymerizing monomers in the presence of the metal amide compound that is obtained by mixing the alkali metal compound or the alkali earth metal compound and the initiating modifying agent, polymerization may be carried out by mixing the alkali metal compound or the alkali earth metal compound and the initiating modifying agent in advance and adding the mixture to a polymerization system. Alternatively, polymerization may be carried out by adding the alkali metal compound or the alkali earth metal compound and the initiating modifying agent separately or at the same time to a polymerization system and mixing both in the polymerization system. Any of these cases is included in an embodiment of "polymerizing monomers including the conjugated diene compound in the presence of the metal amide compound that is obtained by mixing the alkali metal compound or the alkali earth metal compound and the initiating modifying agent."

The amount of the initiating modifying agent used is set as appropriate depending on the kind of the alkali metal compound or the alkali earth metal compound. For example, in the case of using metallic lithium, the amount of the initiating modifying agent used is preferably within a range of 0.1 to 1.8 mol and more preferably within a range of 0.2 to 1.0 mol relative to a total of 1 mol of the metallic lithium that is used for the polymerization from the viewpoint of developing processability when used to produce the polymer composition and low fuel consumption performance when used to produce crosslinked products in a well-balanced manner. As the initiating modifying agent, one initiating modifying agent can be used singly or two or more initiating modifying agents can be used in combination.

The randomizer (hereinafter, also referred to as "vinyl group content adjuster") is used for the purpose of adjusting the vinyl group content that represents the content rate of vinyl bonds in a polymer. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, tetramethylethylenediamine and the like. As the randomizer, one randomizer can be used singly or two or more randomizers can be used in combination.

The organic solvent that is used in the polymerization may be an organic solvent that is not active for reactions, and it is possible to use, for example, an aliphatic hydrocarbon, an alicyclic hydrocarbon, an aromatic hydrocarbon and the like. Among these, a hydrocarbon having 3 to 8 carbon atoms is preferable, and specific examples thereof include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, cyclohexene and the like. As the organic solvent, one organic solvent can be used singly or two or more organic solvents can be used in combination.

In the case of carrying out solution polymerization, the monomer concentration in a reaction solvent is preferably 5 to 50 mass% and more preferably 10 to 30 mass% from the viewpoint of maintaining the balance between productivity and the easiness of polymerization control. The temperature of the polymerization reaction is preferably -20°C to 150°C and more preferably 0°C to 120°C. In addition, the polymerization reaction is preferably carried out at a pressure that is high enough to maintain the monomers substantially in a liquid phase. Such a pressure can be obtained by a method in which the inside of a reactor is pressurized with a gas that is not active for the polymerization reaction or the like. Such a polymerization reaction makes it possible to obtain a conjugated diene-based polymer having an active terminal (more specifically, an alkali metal active terminal or an alkali earth metal active terminal).

The 1,2-vinyl group content (hereinafter, also referred to as "vinyl group content") of the conjugated diene-based polymer having an active terminal is preferably 20 to 70 mass%, more preferably 30 to 68 mass% and still more preferably 33 to 65 mass%. When the vinyl group content is less than 20 mass%, there is a tendency that the wet grip characteristics deteriorate, and, when the vinyl group content is more than 70 mass%, there is a tendency that the low fuel consumption performance deteriorates. The term "vinyl group content" in the present specification is a value that indicates the content proportion of a structural unit having a 1,2-bond in all structural units of butadiene in the conjugated diene-based polymer and is a value measured by ¹H-NMR.

### <Modification Step>

In the present step, the alkali metal active terminal or alkali earth metal active terminal in the conjugated diene-based polymer obtained by the polymerization step and the terminal modifying agent are reacted with each other. When the conjugated diene-based polymer having the active terminal and the terminal modifying agent are reacted with each other, it is possible to obtain a polymer having a nitrogen-containing group at a main chain terminal. The term "active terminal" in the present specification means a portion that is present at an end of a molecular chain and is other than a structure derived from a monomer having a carbon-carbon double bond (more specifically, a metal terminal).

The terminal modifying agent needs to have one or more hydrocarbyloxysilyl groups and one or more nitrogen-containing groups in one molecule. The use of such a terminal modifying agent as the terminal modifying agent makes it possible to further improve a low heat generation property when used to produce crosslinked products, which is preferable. The term "hydrocarbyloxysilyl group" is a group in which at least one hydrocarbyloxy group bonds to a silicon atom and refers to a group represented by formula (5).

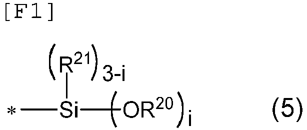

(In the formula (5), R²⁰ and R²¹ are each independently a hydrocarbyl group. i is an integer of 1 to 3. In a case where i is 1, a plurality of R²¹ in the formula is the same as or different from each other. In a case where i is 2 or 3, a plurality of R²⁰ in the formula is the same as or different from each other. "*" represents a bonding site.)

Specifically, the terminal modifying agent is preferably at least one selected from the group consisting of a compound represented by formula (6), a compound represented by formula (7), a compound represented by formula (8) and a compound represented by formula (9).

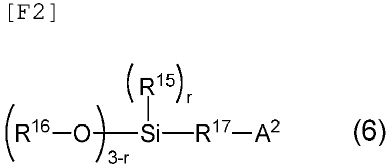

(In the formula (6), A² is a monovalent functional group that has a nitrogen atom, has no active hydrogen and bonds to R¹⁷ with the nitrogen atom. R¹⁵ and R¹⁶ are hydrocarbyl groups, R¹⁷ is a hydrocarbylene group and r is an integer of 0 to 2. In a case where r is 0 or 1, a plurality of R¹⁶ in the formula is the same as or different from each other, and, in a case where r is 2, a plurality of R¹⁵ in the formula is the same as or different from each other.)

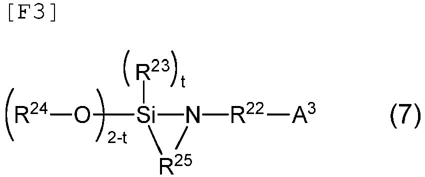

(In the formula (7), A³ is a monovalent functional group that has at least one atom selected from the group consisting of nitrogen, phosphorus, sulfur and silicon, has no active hydrogen and bonds to R²² with a nitrogen atom, a phosphorus atom, an oxygen atom, a sulfur atom or a silicon atom or a hydrocarbyl group having 1 to 20 carbon atoms. R²² is a single bond or a hydrocarbylene group, R²³ and R²⁴ are each independently a hydrocarbyl group, R²⁵ is a hydrocarbylene group and t is 0 or 1. Here, in a case where t is 0, a plurality of R²⁴ in the formula is the same as or different from each other.)

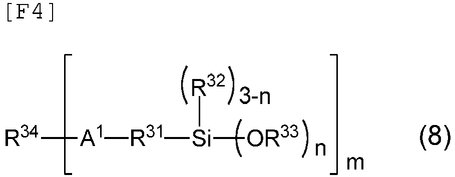

(In the formula (8), R³¹ is an alkanediyl group having 1 to 20 carbon atoms, R³² and R³³ are each independently a hydrocarbyl group having 1 to 20 carbon atoms, A¹ is a group "*-C(R³⁵)=N-" or a group "*-N=C(R³⁵)-" (here, R³⁵ is a hydrogen atom or a hydrocarbyl group and "*" indicates a bonding site that bonds to R³⁴.). R³⁴ is an m-valent hydrocarbon group having 1 to 20 carbon atoms or an m-valent group having 1 to 20 carbon atom that has at least one atom selected from the group consisting of nitrogen, oxygen and sulfur and has no active hydrogen. n is an integer of 1 to 3 and m is an integer of 2 to 10. Regarding each reference symbol of R³¹ to R³³ and A¹, in a case where there is a plurality of the same reference symbols in the formula, groups represented by the reference symbol are the same as or different from each other. A plurality of n in the formula is the same as or different from each other.)

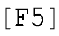

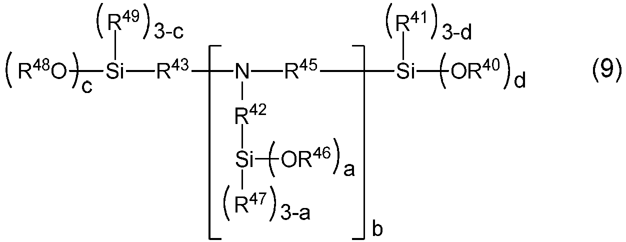

(In the formula (9), R⁴², R⁴³ and R⁴⁵ are each independently an alkanediyl group having 1 to 12 carbon atoms, R⁴⁰, R⁴¹, R⁴⁶, R⁴⁷, R⁴⁸ and R⁴⁹ are each independently a hydrocarbyl group having 1 to 20 carbon atoms, a, c and d are each independently an integer of 1 to 3 and b is an integer of 1 to 10. Regarding each reference symbol, in a case where there is a plurality of the same reference symbols in the formula, groups represented by the reference symbol are the same as or different from each other.)

In the formula (6) and the formula (7), the hydrocarbyl groups represented by R¹⁵, R¹⁶, R²³ and R²⁴ are preferably linear or branched alkyl groups having 1 to 20 carbon atoms, cycloalkyl groups having 3 to 20 carbon atoms or aryl groups having 6 to 20 carbon atoms. R¹⁷, R²² and R²⁵ are preferably linear or branched alkanediyl groups having 1 to 20 carbon atoms, cycloalkylene groups having 3 to 20 carbon atoms or arylene groups having 6 to 20 carbon atoms.

A² is a nitrogen-containing group and may be a chain structure or a cyclic structure. The nitrogen atom in A² does not bond to an active hydrogen and may be protected by a protective group (for example, a trisubstituted hydrocarbylsilyl group or the like). A² may be a group capable of turning into an onium ion by an onium salt generator.

Specific examples of A² include a nitrogen-containing group in which two hydrogen atoms of a primary amino group are substituted with two protective groups, a nitrogen-containing group in which one hydrogen atom of a secondary amino group is substituted with one protective group, a tertiary amino group, an imino group, a pyridyl group and the like. Among these, A² preferably has at least any of a tertiary amino group, a group in which one hydrogen atom of a secondary amino group is substituted with one protective group and a group in which two hydrogen atoms of a primary amino group are substituted with two protective groups. The term "protective group" in the present specification is a functional group that converts A² into a functional group inactive to a polymerization active terminal. The nitrogen-containing group in which one hydrogen atom of a secondary amino group is substituted with one protective group and the tertiary amino group may be chain-like or cyclic.

At least one atom selected from the group consisting of nitrogen, phosphorus, oxygen, sulfur and silicon in A³ does not bond to an active hydrogen and may be protected by a protective group (for example, a trisubstituted hydrocarbylsilyl group or the like). A³ may be a group capable of turning into an onium ion by an onium salt generator.

Specific examples of A³ include a nitrogen-containing group in which two hydrogen atoms of a primary amino group are substituted with two protective groups, a nitrogen-containing group in which one hydrogen atom of a secondary amino group is substituted with one protective group, a tertiary amino group, an imino group, a pyridyl group, a phosphorus-containing group in which two hydrogen atoms of a primary phosphino group are substituted with two protective groups, a phosphorus-containing group in which one hydrogen atom of a secondary phosphino group is substituted with one protective group, a tertiary phosphino group, a group in which a hydrogen atom of a hydroxyl group is protected by a protective group, a sulfur-containing group in which a hydrogen atom of a thiol group is substituted with a protective group, a hydrocarbyloxysilyl group and the like. Among these, A³ is preferably a group having silicon or nitrogen and more preferably a hydrocarbyloxysilyl group, a nitrogen-containing group having a protective group or a tertiary amino group.

In the formula (8), examples of the hydrocarbylene group as R³¹ include an alkanediyl group having 1 to 12 carbon atoms, a cycloalkylene group having 3 to 12 carbon atoms and an arylene group having 6 to 12 carbon atoms. Examples of the hydrocarbyl groups as R³² and R³³ include an alkyl group having 1 to 20 carbon atoms, an allyl group, a cycloalkyl group having 3 to 20 carbon atoms and an aryl group having 6 to 20 carbon atoms.

The m-valent hydrocarbon group as R³⁴ is a group in which m hydrogen atoms have been removed from a hydrocarbon. Particularly, the m-valent hydrocarbon group as R³⁴ is preferably a group in which m hydrogen atoms have been removed from the ring portion of an aromatic hydrocarbon (m-valent aromatic ring group). Specific examples of the aromatic hydrocarbon include monocycles or condensed rings such as a benzene ring, a naphthalene ring and an anthracene ring and structures in which two or more of the above-described rings have been bonded to each other with single bonds.

In a case where R³⁴ is an m-valent group having 1 to 20 carbon atoms that has at least one atom selected from the group consisting of nitrogen, oxygen and sulfur and has no active hydrogen, specific examples thereof include m-valent heterocyclic groups, m-valent groups having a tertiary amine structure and the like. The heterocyclic groups are preferably conjugated heterocyclic groups, and examples thereof include monocycles or condensed rings such as pyridine, pyrimidine, pyrazine, quinoline, naphthalidine, furan and thiophene, groups in which m hydrogen atoms have been removed from the ring portion of a structure formed by linking a plurality of the above-described rings and the like.
m is preferably 2 to 6 from the viewpoint of further improving the processability of the polymer composition. n is preferably 2 or 3 and more preferably 3 since it is possible to further enhance a silica dispersibility-improving effect.

In the formula (9), the alkanediyl groups as R⁴⁵, R⁴² and R⁴³ are preferably linear. Examples of the hydrocarbyl groups as R⁴⁰, R⁴¹ and R⁴⁶ to R⁴⁹ include an alkyl group having 1 to 20 carbon atoms, an allyl group, a cycloalkyl group having 3 to 20 carbon atoms and an aryl group having 6 to 20 carbon atoms.
a, c and d are preferably 2 or 3 and more preferably 3 since it is possible to further enhance a silica dispersibility-improving effect. b is preferably 1 to 5 and more preferably 1 to 3.

As specific examples of the terminal modifying agent, examples of the compound represented by the formula (6) can include N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 3-(4-trimethylsilyl-1-piperazino)propylmethyldimethoxysilane and the like.

Examples of the compound represented by the formula (7) can include 1-trimethylsilyl-2,2-dimethoxy-1-aza-2-silacyclopentane, 1-triethylsilyl-2,2-diethoxy-1-aza-2-silacyclopentane, 2,2-dimethoxy-1-(3-trimethoxysilylpropyl)-1,2-azasilolidine, 2,2-dimethoxy-1-phenyl-1,2-azasilolidine, 2-(2,2-dimethoxy-1,2-azasilolidine-1-yl)-N,N-diethylethan-1-amine and the like.

Examples of the compound represented by the formula (8) can include compounds represented by the following formula (m-1-1) to formula (m-1-8), respectively, compounds in which an alkyl group and an alkanediyl group in the above-described compound each have been substituted with an alkyl group having 1 to 6 carbon atoms or an alkanediyl group having 1 to 6 carbon atoms and the like.

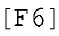

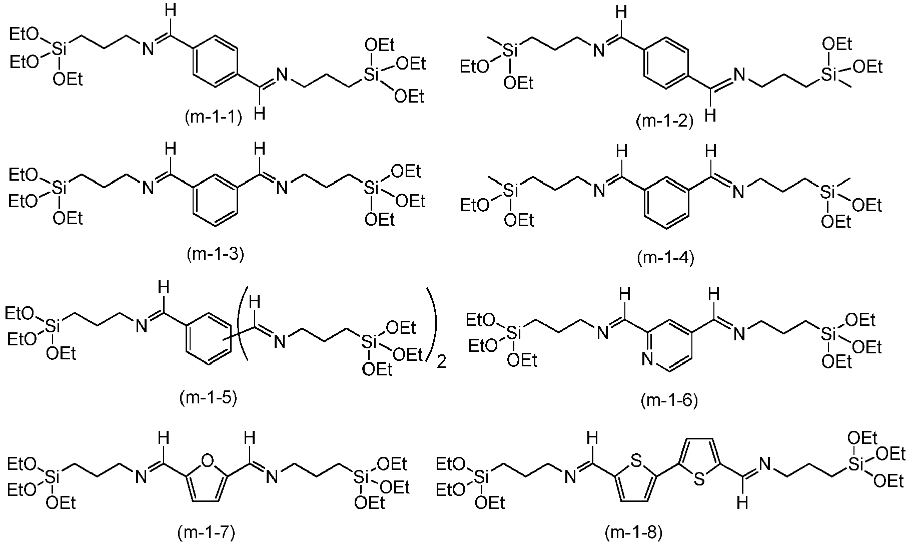

Examples of the compound represented by the formula (9) can include tris(2-triethoxysilylethyl)amine, tris(3-triethoxysilylpropyl)amine, tris(5-triethoxysilylpentyl)amine, N,N,N',N'-tetra(2-triethoxysilylethyl)-1,2-diaminoethane, N,N,N',N'-tetra(3-triethoxysilylpropyl)-1,3-diaminopropane and compounds in which an alkyl group and an alkanediyl group in the above-described compound each have been substituted with an alkyl group having 1 to 6 carbon atoms or an alkanediyl group having 1 to 6 carbon atoms. As the terminal modifying agent, one of these may be used singly or two or more of these may be used in combination.

A reaction between the polymerization active terminal and the terminal modifying agent is preferably carried out as a solution reaction. This solution reaction may be carried out using a solution containing an unreacted monomer after the end of the polymerization reaction or may be carried out after the conjugated diene-based polymer, which is contained in a solution, is isolated and dissolved in an appropriate solvent such as cyclohexane. In addition, the reaction may be carried out using any of a batch type and a continuous type. At this time, a method for adding the terminal modifying agent is not particularly limited, and examples thereof include a method in which the terminal modifying agent is collectively added, a method in which the terminal modifying agent is added in a divided manner, a method in which the terminal modifying agent is continuously added and the like.

Upon the above-described reaction, the amount of the terminal modifying agent used needs to be set as appropriate depending on the kind of the compound that is used in the reaction and is preferably 0.1 molar equivalent or more and more preferably 0.3 molar equivalent or more relative to metal atoms in the polymerization initiator that are involved in the polymerization reaction. When the amount of the terminal modifying agent used upon the above-described reaction is set to 0.1 molar equivalent or more, it is possible to sufficiently progress a modification reaction and to suitably improve the dispersibility of the filler. In addition, in order to avoid the addition of an excessive amount of the terminal modifying agent, the amount of the terminal modifying agent used is preferably 1.5 molar equivalent or less and more preferably 1.2 molar equivalent or less relative to the metal atoms in the polymerization initiator that are involved in the polymerization reaction.

The temperature of the above-described reaction is normally the same as the temperature of the polymerization reaction, preferably set to -20°C to 150°C and more preferably set to 0°C to 120°C. When the reaction temperature is too low, there is a tendency that the viscosity of the conjugated diene-based polymer after modification increases. On the other hand, when the reaction temperature is too high, the polymerization active terminal is likely to be deactivated. The reaction time is preferably one minute to five hours and more preferably two minutes to one hour.

At the time of producing the modified conjugated diene-based polymer, a treatment of reacting the polymerization active terminal and a coupling agent may be carried out for the purpose of increasing the Mooney viscosity or cold flow characteristics of the polymer or the like. A reaction using the coupling agent may be carried out before or after the reaction between the polymerization active terminal and the terminal modifying agent or may be carried out at the same time as the reaction between the polymerization active terminal and the terminal modifying agent. Specific examples of the coupling agent include 2,4-tolylene diisocyanate, diphenylmethane diisocyanate, N,N,N',N'-tetramethylphthalamide, tetrachlorosilicon, N,N,N',N'-tetramethyl-4,4'-diaminobenzophenone, tetrachlorotin and the like.

In addition, in the case of using a compound having protective groups (trimethylsilyl groups or the like) as the terminal modifying agent, a polymer obtained by replacing some or all of protective groups with hydrogen in a modified conjugated diene-based polymer having protective groups derived from the terminal modifying agent may be used as the modified conjugated diene-based polymer in the subsequent steps. In addition, in the case of using a protective group-containing compound as the terminal modifying agent, a modified conjugated diene-based polymer modified by the terminal modifying agent and an onium salt generator may be further reacted with each other. In this case, it is possible to obtain a polymer having an onium salt structure in the polymer terminal as the modified conjugated diene-based polymer. When the modified conjugated diene-based polymer has an onium salt structure, it is possible to improve the shape-retaining property of crosslinked products that are obtained using the polymer composition, which is preferable.

The polystyrene-equivalent weight-average molecular weight (Mw) of the modified conjugated diene-based polymer by gel permeation chromatography (GPC) is preferably 1.0 × 10⁵ or more. When Mw is smaller than 1.0 × 10⁵, there is a tendency that the shape stability, tensile strength and wear resistance of crosslinked products are likely to deteriorate. Mw of the modified conjugated diene-based polymer is more preferably 1.2 × 10⁵ or more and still more preferably 1.5 × 10⁵ or more. In addition, Mw of the modified conjugated diene-based polymer is preferably 1.5 × 10⁶ or less. When Mw is larger than 1.5 × 10⁶, there is a tendency that the processability of the polymer composition is likely to deteriorate. Mw of the modified conjugated diene-based polymer is more preferably 1.3 × 10⁶ or less and still more preferably 1.0 × 10⁶ or less.

### <Mixing step>

In the present step, a polymer solution containing the modified conjugated diene-based polymer dissolved in a solvent, which is obtained by the modification step, (hereinafter, also referred to as "polymer solution A") and a surfactant are mixed together.

As the polymer solution A, a reaction solution containing the modified conjugated diene-based polymer, which is obtained by the modification step, may be used as it is or the polymer solution A may be a solution prepared by isolating the modified conjugated diene-based polymer contained in the reaction solution and dissolving the modified conjugated diene-based polymer in an appropriate solvent. Examples of the solvent in which the isolated modified conjugated diene-based polymer is dissolved include the organic solvents exemplified as the solvent that can be used in the polymerization of monomers. At this time, it is preferable to select an organic solvent capable of dissolving the surfactant. From the industrial viewpoint, it is preferable to use the reaction solution containing the modified conjugated diene-based polymer, which is obtained by the modification step, as it is as the polymer solution A since it is possible to reduce the number of steps and to further enhance productivity.

The content proportion of the modified conjugated diene-based polymer in the polymer solution A is preferably 1 mass% or more, more preferably 2 mass% or more and still more preferably 3 mass% or more relative to the total amount of the polymer solution A. In addition, the content proportion of the modified conjugated diene-based polymer in the polymer solution A is preferably 90 mass% or less, more preferably 50 mass% or less and still more preferably 30 mass% or less. When the content proportion of the modified conjugated diene-based polymer in the polymer solution A is set to 1 mass% or more, it is possible to sufficiently ensure the amount of the rubber bale produced at the time of producing the rubber bale. In addition, when the content proportion is set to 90 mass% or less, it is possible to uniformly disperse the surfactant in the polymer solution A and to improve the qualities of a rubber bale to be obtained and the stability thereof.

### (Surfactant)

As the surfactant, a compound having HLB of 9.0 or less and having a hydrophilic group and a lipophilic group in one molecule (hereinafter, also referred to as "surfactant C") is used. Here, HLB is an acronym for hydrophilic-lipophilic balance and is a value that changes depending on the balance between a hydrophilic group and a lipophilic group in a molecule. HLB represents that the hydrophilicity becomes higher as the numerical value becomes larger. The HLB value in the present specification is a value that is obtained by a calculation formula proposed by Griffin (Griffin method; 20 × (the total of the formula weights of hydrophilic portions (an alkyl ether portion and the like) in a surfactant/the molecular weight of the surfactant)). In a case where the surfactant C is composed of two or more surfactants, it means that a value obtained from the weighted average of the HLB values of individual components is 9.0 or less.

The HLB value of the surfactant C is preferably 8.0 or less, more preferably 7.0 or less, still more preferably 6.7 or less and particularly preferably 6.5 or less since it is possible to retain and stabilize the surfactant C in rubber to obtain a rubber bale having excellent scorch resistance. The HLB value of the surfactant C is 0 or more. When the HLB value of the surfactant C is set in the above-described range, it is possible to obtain a high-performance modified conjugated diene-based polymer using a water-based solvent at the time of isolating the modified conjugated diene-based polymer in the subsequent desolvation step, which is suitable.

The surfactant C is preferably a nonionic surfactant and is, specifically, preferably at least one selected from the group consisting of a compound represented by formula (1), a compound represented by formula (2) and a compound represented by formula (3).

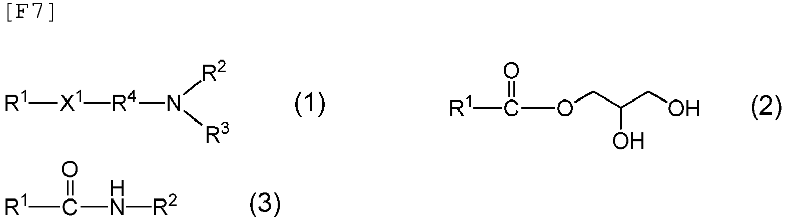

(In the formula (1) to the formula (3), R¹ is a hydrocarbyl group having 10 to 18 carbon atoms, and R² and R³ are each independently a hydrocarbyl group or - (R⁶O)ᵣ-H. R⁶ is an ethylene group or a propylene group, and r is an integer of 1 or more. In a case where r is 2 or more, a plurality of R⁶ is the same as or different from each other, X¹ is a single bond, an oxygen atom or - NR⁵-, and R⁴ is a single bond in a case where X¹ is a single bond, and is a hydrocarbylene group in a case where X¹ is an oxygen atom or -NR⁵-. R⁵ is a hydrogen atom, a hydrocarbyl group or -(R⁶O)ᵣ-H.)

In the formula (1) to the formula (3), R¹ is preferably a saturated or unsaturated linear hydrocarbyl group and more preferably a linear alkyl group or alkenyl group. In a case where R⁴ is a hydrocarbylene group, R⁴ is preferably a saturated or unsaturated linear hydrocarbylene group and more preferably a linear alkanediyl group or alkenediyl group. The number of carbon atoms in each group in one molecule is selected so that HLB reaches 9.0 or less. As the surfactant C, among these, a compound having a propylene glycol chain (-(R⁵⁰-O)ⱼ-, where R⁵⁰ is a propylene group and j is an integer of 1 or more) in the molecule, is preferably used. Examples of R⁵⁰ include a 1,2-propylene group and a 1,3-propylene group.

As specific examples of the surfactant C, examples of the compound represented by the formula (1) include polyoxyethylene alkylamine, polyoxypropylene polyoxyethylene alkylamine, polyoxypropylene alkylamine, polyoxyethylene-alkylpropylene-diamine, polyoxypropylene-alkylpropylene-diamine, 1,1'-(dodecylimino)bis(2-propanol), 2,2'-(dodecylimino)bisethanol, 2,2'-(hexadecylimino)bisethanol and the like.

Examples of the compound represented by the formula (2) include glycerin monostearate, glycerin monooleate and the like.

Examples of the compound represented by the formula (3) include polyoxyethylene laurate monoethanolamide, polyoxypropylene coconut fatty acid monoethanolamide, polyoxypropylene myristate monoethanolamide, polyoxypropylene coconut fatty acid monoisopropanolamide and the like. As the surfactant C, one surfactant may be used singly or two or more surfactants may be used in combination.

A form of mixing the polymer solution A and the surfactant C is not particularly limited. For example, in the case of adding the surfactant C to the polymer solution A, examples thereof include a method in which the surfactant C is collectively added to the polymer solution A, a method in which the surfactant C is added to the polymer solution A in a divided manner, a method in which the surfactant C is continuously added to the polymer solution A and the like. After the surfactant C is added to the polymer solution A, it is preferable to uniformly disperse the surfactant C in the polymer solution A by carrying out a treatment such as stirring. The temperature at the time of mixing the polymer solution A and the surfactant C is the same as the temperature of the polymerization reaction, preferably - 20°C to 150°C, more preferably 0°C to 120°C and still more preferably 20°C to 100°C.

The ratio at the time of mixing the polymer solution A and the surfactant C is preferably set so that the blending proportion of the surfactant C reaches 0.05 parts by mass or more per 100 parts by mass of the modified conjugated diene-based polymer. That is, the blending proportion of the surfactant C is preferably 0.05 parts by mass or more, more preferably 0.1 parts by mass or more and still more preferably 0.2 parts by mass or more per 100 parts by mass of the modified conjugated diene-based polymer. In addition, the blending proportion of the surfactant C is preferably 10 parts by mass or less, more preferably 8 parts by mass or less and still more preferably 5 parts by mass or less per 100 parts by mass of the modified conjugated diene-based polymer. When the content proportion of the surfactant C is set to 0.05 parts by mass or more, it is possible to sufficiently disperse the surfactant C in the polymer solution A and to sufficiently improve low fuel consumption performance in crosslinked products to be obtained, which is suitable. In addition, when the content proportion of the surfactant C is set to 10 parts by mass or less, it is possible to suppress the performance deterioration of the modified conjugated diene-based polymer attributed to the excessive amount of the surfactant C contained, which is suitable.

### <Desolvation Step>

In the present step, the solvent is removed from a solution containing the modified conjugated diene-based polymer and the surfactant C, which is obtained by the mixing step, (hereinafter, also referred to as "mixed solution B"), and the modified conjugated diene-based polymer is isolated. This isolated modified conjugated diene-based polymer is subjected to a drying operation such as a heat treatment as necessary and compression-molded into a desired shape (for example, a cuboid shape), whereby a rubber bale can be obtained.

A method for removing the solvent from the mixed solution A is not particularly limited, and the solvent can be removed by a well-known desolvation method, for example, a method in which the solvent is separated by steam stripping and the obtained polymer is dehydrated and dried; a method in which the solvent is devolatilized with a twin screw extruder or the like; a method in which the solvent is directly devolatilized with a drum dryer or the like. Among these, the solvent is preferably removed by a method in which the mixed solution B is brought into contact with water and desolvation is carried out since it is possible to simply carry out a desolvation treatment. In the present production method, the surfactant C having an HLB value of 9.0 or less is used as an additive that is mixed with the polymer solution A in the mixing step. Therefore, in the present step, even in a case where steam stripping is adopted as the desolvation method, it is possible to leave the surfactant C in the system and to retain a state in which a sufficient amount of the surfactant C and the modified conjugated diene-based polymer are mixed together. This makes it possible to sufficiently obtain an effect of improving the scorch resistance, processability of the polymer composition and the low fuel consumption performance of crosslinked products even in a case where steam stripping is adopted, which is suitable.

At the time of producing a rubber bale using the modified conjugated diene-based polymer obtained by the desolvation, a component different from the modified conjugated diene-based polymer (additive) may be blended to an extent that the effect of the present disclosure is not impaired. Examples of such an additive include an extender oil, an antioxidant and the like.

### <<Polymer Composition>>

A polymer composition of the present disclosure can be obtained by blending a reinforcing filler with the rubber bale. In addition, the polymer composition of the present disclosure may further contain a component different from the modified conjugated diene-based polymer that is contained in the rubber bale and the surfactant (additional component) as long as the effect of the present disclosure is not impaired. Hereinafter, the reinforcing filler and the additional component that can be contained in the polymer composition will be described.

### (Reinforcing Filler)

The reinforcing filler is blended with the rubber bale in order to increase the strengths of crosslinked products. Examples of the filler for reinforcement include silica, carbon black, an inorganic compound represented by the following formula (4) (hereinafter, also referred to as "inorganic compound (M)"), fibers for reinforcement (for example, inorganic fibers such as glass fibers or carbon fibers and organic fibers such as nylon or polyesters) and the like. Among these, the reinforcing filler is preferably at least one selected from the group consisting of silica, carbon black and the inorganic compound (M).

nM¹·mSiOₖ·iH₂O ... (4)

(In the formula (4), M¹ is at least one selected from the group consisting of a specific metal that is any of aluminum, magnesium, titanium and calcium, an oxide of the specific metal, a hydroxide of the specific metal, a hydrate of an oxide of the specific metal and a hydrate of a hydroxide of the specific metal; n is an integer of 1 to 5; m is an integer of 0 to 10; k is an integer of 2 to 5; and i is an integer of 0 to 10).

Examples of the silica include wet silica (hydrous silicic acid), dry silica (silicic anhydride), colloidal silica, precipitated silica, calcium silicate, aluminum silicate and the like. Among these, wet silica is particularly preferable from the viewpoint of an effect of improving fracture characteristics or an effect of satisfying both a wet grip property and low rolling resistance. In addition, high dispersible type silica is also preferably used since it is possible to improve dispersibility in the polymer composition and to improve physical properties and processability. As the silica, one silica can be used singly or two or more silica can be used in combination. Examples of the carbon black include GPF, FEF, HAF, ISAF, SAF and the like, and the carbon black is not particularly limited. Furthermore, in addition to silica or carbon black as the inorganic filler, a variety of reinforcing fillers such as clay and calcium carbonate may be further blended with the polymer composition.

As specific examples of the inorganic compound (M), examples of a compound in which the specific metal is aluminum can include aluminum oxide, alumina monohydrate, aluminum hydroxide, aluminum carbonate, aluminum silicate, calcium aluminum oxide (Al₂O₃·CaO·2SiO₄ and the like) and the like; examples of a compound in which the specific metal is magnesium can include magnesium oxide, magnesium hydroxide, magnesium carbonate, magnesium silicate, magnesium calcium silicate (CaMgSiO₄), talc and the like; examples of a compound in which the specific metal is titanium can include titanium oxide and the like; examples of a compound in which the specific metal is calcium can include calcium oxide, calcium hydroxide, calcium carbonate, calcium silicate and the like, respectively.

As the reinforcing filler, one of silica, carbon black and the inorganic compound (M) may be used singly or two or more thereof may be used in combination. Among these, since an effect of improving tire characteristics in the combination with the modified conjugated diene-based polymer is strong, the polymer composition preferably contains silica as the reinforcing filler, and, particularly, wet silica, dry silica or colloidal silica is preferably used. When the reinforcing filler is used, the content proportion of the reinforcing filler in the polymer composition (the total amount in a case where two or more reinforcing fillers are contained) is preferably 25 to 130 parts by mass and more preferably 30 to 110 parts by mass per 100 parts by mass of the total amount of the polymer components that are contained in the polymer composition.

### (Crosslinking Agent)

Normally, a crosslinking agent is contained in the polymer composition. Examples of the crosslinking agent include sulfur, sulfur halides, organic peroxides, quinonedioximes, organic polyvalent amine compounds, alkylphenol resins having a methylol group and the like, and sulfur is normally used. The amount of sulfur blended is preferably 0.1 to 5 parts by mass and more preferably 0.5 to 3 parts by mass per 100 parts by mass of the total amount of rubber components that are contained in the polymer composition.

### (Different Rubber Component)

A rubber component different from the modified conjugated diene-based polymer (hereinafter, also referred to as "additional rubber component") may be further blended with the polymer composition. The term "rubber component" contained in the polymer composition in the present specification refers to a polymer from which a cured product exhibiting rubber elasticity by thermal curing can be obtained. The cured product exhibits properties of significantly deforming due to a small force at room temperature (for example, deforming to stretch twice or more when stretched at room temperature) and rapidly returning to an almost original shape when the force is removed.

The kind of the additional rubber component is not particularly limited, but unmodified rubber is preferable and examples thereof include butadiene rubber (BR, for example, high-cis BR in which cis-1,4 bonds account for 90% or more), styrene butadiene rubber (SBR), natural rubber (NR), isoprene rubber (IR), styrene isoprene copolymer rubber, butadiene isoprene copolymer rubber and the like. The amount of the additional rubber component blended is preferably 5 to 60 parts by mass and more preferably 10 to 50 parts by mass per 100 parts by mass of the total amount of the rubber components that are contained in the polymer composition (the modified conjugated diene-based polymer and the additional rubber component).

In addition to the above-described components, a variety of additives that are ordinarily used in polymer compositions such as tire uses, for example, an antiaging agent, zinc white, stearic acid, a softening agent, sulfur, a vulcanization accelerator, a silane coupling agent, a compatibilizer, a vulcanization aid, a process oil, a processing aid, an anti-scorch agent and the like can be blended with the polymer composition. The amount of these blended can be selected as appropriate depending on a variety of components to an extent that the effect of the present disclosure is not impaired.

### << Method for Producing Polymer Composition and Crosslinked product>>

The polymer composition can be produced by mixing (specifically kneading), in addition to the rubber bale and the reinforcing filler, a component that is blended as necessary using a kneader such as an open kneader (for example, a roll) or a closed kneader (for example, a Banbury mixer).

In the kneading step, first, the rubber bale containing the modified conjugated diene-based polymer and the surfactant and an additive other than vulcanization compounding agents (a crosslinking agent, a vulcanization accelerator and a vulcanization aid) (hereinafter, also referred to as "first additive") are melted and kneaded using a kneader (first step). The first additive preferably contains at least a reinforcing filler. The first additive may contain a surfactant to an extent that the effect of the present disclosure is not impaired. Specifically, the content of the surfactant in the first additive is preferably 10 parts by mass or less, more preferably 5 parts by mass or less and still more preferably 1 parts by mass or less per 100 parts by mass of the surfactant that is used in the mixing step. The kneading temperature in the first step is set as appropriate depending on the melting points, glass transition temperatures or the like of the polymer components. This melting and kneading make the first additive mixed with the polymer components and makes it possible to sufficiently obtain an effect of increasing the strength of a rubber product after vulcanization, improving the kneading processability of the polymer composition, preventing the deterioration of rubber attributed to a radical generated during kneading or the like.

Subsequently, a kneaded product obtained by the first step is returned to room temperature as necessary, then, the vulcanization compounding agents are added to the kneaded product, and the components are melted and kneaded using the kneader (second step). A polymer composition obtained by the second step is molded and then crosslinked (vulcanized), whereby a crosslinked product can be obtained.

### <<Crosslinked product and Tire>>

The crosslinked product that is obtained using the polymer composition can be applied to a variety of rubber products. Specific examples of the variety of rubber products include tire uses such as tire treads, undertreads, carcasses, sidewalls and beads; sealing materials such as packings, gaskets, weather strips and O-rings; interior and exterior skin materials for a variety of vehicles such as automobiles, ships, aircrafts and railways; building materials; anti-vibration rubbers for industrial machinery and facilities and the like; a variety of hoses and hose covers such as diaphragms, rolls, radiator hoses and air hoses; belts such as belts for power transmission; linings; dust boots; medical equipment materials; fenders; insulating materials for electric wires; other industrial products and the like.

According to the rubber bale of the present disclosure, it is possible to obtain a crosslinked product having small rolling resistance and excellent low fuel consumption performance. Therefore, a polymer composition obtained by using the rubber bale of the present disclosure is suitable as a material for, in particular, either or both of a tread and a sidewall of a tire.

A tire can be produced according to a normal method. For example, a polymer composition containing polymer components and a component that is blended as necessary is mixed with a kneader and made into a sheet shape, the sheet-shaped mixture is disposed at a predetermined position according to a normal method and vulcanization-molded to form a tread rubber or a sidewall rubber, and a pneumatic tire is obtained.

### Examples

Hereinafter, the present disclosure will be specifically described based on examples, but the present disclosure is not limited to these examples. "Parts" and "%" in the examples and comparative examples are mass-based unless particularly otherwise described. Methods for measuring a variety of physical property values of polymers and rubbers will be described below.
(1) Bound styrene content (%): Calculated by ¹H-NMR measurement at 500 MHz using deuterated chloroform as a solvent.
(2) Vinyl group content (%): Calculated by ¹H-NMR measurement at 500 MHz.
(3) Weight-average molecular weight of polymer before modification: Measurement was carried out with a gel permeation chromatography (GPC) system "HLC-8120GPC" (manufacture by Tosoh Corporation) under the following conditions, and the polystyrene-equivalent weight-average molecular weight (Mw) was obtained from a retention time corresponding to the maximum peak apex in an obtained GPC curve.

### (GPC conditions)

Column; Two "GMHXL" (trade name, manufactured by Tosoh Corporation)
Column temperature; 40°C Mobile phase; Tetrahydrofuran
Flow rate; 1.0 ml/minute Sample concentration; 10 mg/20 ml

(4) Mooney viscosity (MV): Measured according to JIS K 6300-1 under conditions of one minute of preheating, four minutes of rotor operation time and a temperature of 100°C using an L rotor.

### 1. Synthesis of Polymer

### [Synthesis Example 1: Synthesis of Polymer A]

Cyclohexane (2,500 g), tetrahydrofuran (50 g), styrene (125 g) and 1,3-butadiene (365 g) were prepared in a nitrogen-substituted autoclave reactor having an internal capacity of five liters. The temperature of the contents in the reactor was adjusted to 10°C, and then n-butyllithium (5.20 mmol) was added thereto to initiate polymerization. The polymerization was carried out under an adiabatic condition, and the peak temperature reached 85°C. At a point in time where the polymerization conversion rate reached 99% (after 26 minutes from the initiation of the polymerization), 1.3-butadiene (10 g) was added thereto for two minutes, polymerization was further carried out for three minutes, and then 3-(4-trimethylsilyl-1-piperazino)propyltriethoxysilane (4.46 mmol) was added thereto to carry out a reaction for 15 minutes, thereby obtaining a modified conjugated diene-based polymer solution.

Pentaerythritol tetrakis[3-(3,5-di-tert-butyl-4-hydroxyphenyl)propionate] was added to the obtained modified conjugated diene-based polymer solution, next, desolvation was carried out by steam stripping (steam temperature: 190°C), and the solute was dried with a heated roll having a temperature adjusted to 110°C, thereby obtaining a polymer A. The properties of the polymer A are shown in Table 1 below.

### [Synthesis Example 2: Synthesis of Polymer B]

A polymer B was obtained by the same manner as in Synthesis Example 1 except that a compound represented by the following formula (N-Si-2) (1.30 mmol) was used instead of 3-(4-trimethylsilyl-1-piperazino)propyltriethoxysilane (4.46 mmol) in Synthesis Example 1. The properties of the polymer B are shown in Table 1 below.

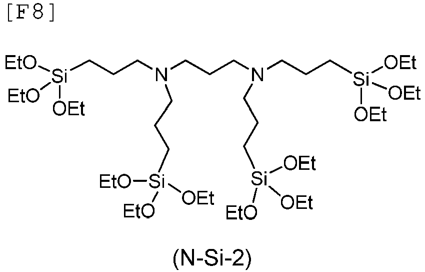

### [Synthesis Example 3: Synthesis of Polymer C]

A polymer C was obtained as an unmodified conjugated diene-based polymer by the same manner as in Synthesis Example 1 except that 3-(4-trimethylsilyl-1-piperazine)propyltriethoxysilano was not used in Synthesis Example 1. The properties of the polymer C are shown in Table 1.

### [Synthesis Example 4: Synthesis of Polymer D]

Cyclohexane (2,500 g), tetrahydrofuran (50 g), styrene (125 g) and 1,3-butadiene (365 g) were prepared in a nitrogen-substituted autoclave reactor having an internal capacity of five liters. The temperature of the contents in the reactor was adjusted to 10°C, and then n-butyllithium (5.20 mmol) was added thereto to initiate polymerization. The polymerization was carried out under an adiabatic condition, and the peak temperature reached 85°C. At a point in time where the polymerization conversion rate reached 99% (after 26 minutes from the initiation of the polymerization), 1.3-butadiene (10 g) was added thereto for two minutes, polymerization was further carried out for three minutes, and then 3-(4-trimethylsilyl-1-piperazino)propyltriethoxysilane (4.46 mmol) was added thereto to carry out a reaction for 15 minutes, thereby obtaining a modified conjugated diene-based polymer solution.

Pentaerythritol tetrakis[3-(3,5-di-tert-butyl-4-hydroxyphenyl)propionate] was added to the obtained modified conjugated diene-based polymer solution, next, LIPONOL C/18-18 (nonionic surfactant manufactured by Lion Specialty Chemicals Co., Ltd., polyoxypropylene polyoxyethylene alkyl (C8-C18) amine, HLB = 6.4) (2.5 g) was added to the obtained modified conjugated diene-based polymer solution and mixed. Next, desolvation was carried out by steam stripping (steam temperature: 190°C), and the solute was dried with a heated roll having a temperature adjusted to 110°C, thereby obtaining a polymer D. The properties of the polymer D are shown in Table 1 below.

### [Synthesis Examples 5 to 11: Syntheses of Polymers E to K]

Polymers E to K were each obtained by the same manner as in Synthesis Example 4 except that the types and amounts of a terminal modifying agent and the surfactant that were used in Synthesis Example 4 were changed as shown in Table 1 below. In Synthesis Example 11, no terminal modifying agent was used. The properties of the polymers E to K are shown in Table 1 below, respectively.

**[Table 1]**

| Formulae for polymerization | | | | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 | Synthesis Example 10 | Synthesis Example 11 |
|---|---|---|---|---|---|---|---|---|---|---|---|---|---|---|
| Type of (modified) conjugated diene-based polymer | | | | A | B | C | D | E | F | G | H | I | J | K |
| Solvent | Cyclohexane | | (g) | 2500 | 2500 | 2500 | 2500 | 2500 | 2500 | 2500 | 2500 | 2500 | 2500 | 2500 |
| Vinyl group content adjuster | Tetrahydrofuran | | (g) | 50 | 50 | 50 | 50 | 50 | 50 | 50 | 50 | 50 | 50 | 50 |
| Monomer | Styrene | | (g) | 125 | 125 | 125 | 125 | 125 | 125 | 125 | 125 | 125 | 125 | 125 |
| | 1,3-Butadiene | | (g) | 365 | 365 | 365 | 365 | 365 | 365 | 365 | 365 | 365 | 365 | 365 |
| | additional butadiene | | (g) | 10 | 10 | 10 | 10 | 10 | 10 | 10 | 10 | 10 | 10 | 10 |
| Polymerization initiator | n-Butyllithium | | (mmol) | 5.20 | 5.20 | 5.20 | 5.20 | 5.20 | 5.20 | 5.20 | 5.20 | 5.20 | 5.20 | 5.20 |
| Terminal modifying agent | N-Si-1 | ∗1 | (mmol) | 4.46 | - | - | 4.46 | 4.46 | 4.46 | - | 4.46 | 4.46 | 4.46 | - |
| | N-Si-2 | ∗2 | (mmol) | - | 1.30 | - | - | - | - | 1.30 | - | - | - | - |
| Surfactant | Type | | | - | - | - | a-1 | a-2 | a-3 | a-3 | a-4 | a-5 | a-6 | a-3 |
| | Addition amount | | (g) | - | - | - | 2.5 | 2.5 | 2.5 | 2.5 | 2.5 | 2.5 | 2.5 | 2.5 |
| | HLB | | | - | - | - | 6.4 | 0 | 6.5 | 6.5 | 9 | 12.5 | 14 | 6.5 |
| Physical properties of polymer | Bound styrene content | | (%) | 25 | 25 | 25 | 25 | 25 | 25 | 25 | 25 | 25 | 25 | 25 |
| | Vinyl group content | | (%) | 58 | 58 | 58 | 58 | 58 | 58 | 58 | 58 | 58 | 58 | 58 |
| | Weight-average molecular weight before modification (×10⁴) | | | 20 | 20 | 20 | 20 | 20 | 20 | 20 | 20 | 20 | 20 | 20 |
| | Mooney viscosity (ML1+4, 100°C) | | | 8 | 70 | 10 | 5 | 4 | 6 | 60 | 6 | 4 | 4 | 5 |

Abbreviations in Table 1 are as described below.

### (Terminal Modifying Agent)

N-Si-1 (*1): 3-(4-Trimethylsilyl-1-piperazino)propyltriethoxysilane
N-Si-2 (*2): A compound represented by the formula (N-Si-2)

### (Surfactant)

a-1: LIPONOL C/18-18 (nonionic surfactant manufactured by Lion Specialty Chemicals Co., Ltd., polyoxypropylene polyoxyethylene alkyl (C8-C18) amine, HLB = 6.4)
a-2: FT-6020J (nonionic surfactant manufactured by Lion Specialty Chemicals Co., Ltd., polyoxypropylene alkyl (C8-C18) amine, HLB = 0)
a-3: LEOSTAT GS-95P (nonionic surfactant manufactured by Lion Specialty Chemicals Co., Ltd., glycerin monostearate, HLB = 6.5)
a-4: AMIZETT 1PC (nonionic surfactant manufactured by Kawaken Fine Chemicals Co., Ltd., polyoxypropylene coconut fatty acid monoisopropanolamide, HLB = 9.0)
a-5: NYMEEN S-210 (nonionic surfactant manufactured by NOF Corporation, polyoxyethylene stearyl amine, HLB = 12.5)
a-6: LIPONOL T/25 (nonionic surfactant manufactured by Lion Specialty Chemicals Co., Ltd., polyoxyethylene alkyl amine, HLB = 14.0)

The HLB values of the surfactants are values calculated by the Griffin method.

### [Examples 1 to 5 and Comparative Examples 1 to 9]

Individual components were blended according to blending formulae shown in Table 2 below and melted and kneaded to produce polymer compositions. The kneading was carried out by the following method.

As first-stage kneading, the (modified) conjugated diene-based polymer, polybutadiene rubber, an extender oil, silica, a silane coupling agent, stearic acid, an antiaging agent and zinc oxide were blended and kneaded using a batch-type mixer equipped with a temperature control device (manufactured by Toyo Seiki Seisaku-sho Co., Ltd.; trade name LABO PLASTOMILL at a set temperature adjusted to 100°C under conditions of a rotation speed of 60 rpm and a kneading time of four minutes. In Comparative Examples 6 to 8, a surfactant was further blended. The temperatures of kneaded products discharged from the mixer at the time of the discharge were all approximately 150°C.

Next, as second-stage kneading, the kneaded products obtained by the first-stage kneading were cooled to room temperature, then, a vulcanization accelerator and sulfur were blended therewith in the mixer, the set temperature was adjusted to 70°C and the components were kneaded under conditions of a rotation speed of 60 rpm and a kneading time of 1.5 minutes, thereby obtaining polymer compositions, respectively. The temperatures of kneaded products discharged from the mixer at the time of the discharge were all 100°C or lower. Next, vulcanization molding was carried out on the individual obtained polymer compositions with a vulcanization press at 160°C for a predetermined time, thereby obtaining crosslinked rubbers as crosslinked products. Physical properties (1) to (4) were evaluated as described below using the obtained crosslinked rubbers. The results are shown in Table 2 below.

### (1) Mooney Viscosity (MV)

The kneaded product before vulcanization was used as a measurement specimen, and, according to JIS K 6300-1: 2013, the Mooney viscosity was measured under conditions of one minute of preheating, four minutes of rotor operation time and a temperature of 100°C using a Mooney tester (manufactured by Alpha Technologies) and an L rotor. The Mooney viscosity of Comparative Example 6 is regarded as 100 as an index, and, as the numerical value becomes larger, the processability of the polymer composition becomes more favorable.

### (2) Filler Incorporating Rate

In the first-stage kneading, a torque change of the kneaded product was measured with the batch-type mixer, and the reciprocal of a time taken for the torque of the kneaded product to reach the peak after the injection of silica (this is regarded as "peak arrival time") was calculated. The reciprocal in Comparative Example 6 is indicated by 100 as an index, and it is indicated that, as the numerical value becomes larger, the peak arrival time becomes shorter and the productivity becomes higher.

### (3) Scorch Resistance

The Mooney viscosity was measured according to JIS K 6300-1: 2013 under conditions of one minute of preheating, four minutes of rotor operation time and a temperature of 125°C using the Mooney tester (manufactured by Alpha Technologies) and the L-type rotor, and a time (t5) taken for the viscosity to increase by five point from the minimum value (Vm) was regarded as an index of scorch resistance. The time in Comparative Example 6 is indicated by 100 as an index, and it is indicated that, as the numerical value becomes larger, the scorch resistance becomes more favorable.

### (4) Loss Tangent (50°C tanδ Rolling Resistance)

The ratio of the loss modulus G'' to the storage modulus G' under a condition of a shear strain of 1% (50°C tanδ) was measured using a shear-type dynamic spectrometer (manufactured by TA Instruments Japan Inc.) under conditions of an angular velocity of 100 radians per second and a temperature of 50°C. The ratio in Comparative Example 6 is indicated by 100 as an index, and it is indicated that, as the numerical value becomes larger, the rolling resistance becomes smaller, and the low fuel consumption performance becomes more favorable.

**[Table 2]**

| | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|
| | (Modified) conjugated diene-based | type | D | E | F | G | H | A | B | C | I | J | A | A | A | K |
| | polymer | parts by mass | 72.5 | 72.5 | 72.5 | 72.5 | 72.5 | 70 | 70 | 70 | 72.5 | 72.5 | 70 | 70 | 70 | 70 |
| | Polybutadiene rubber *1 | parts by mass | 30 | 30 | 30 | 30 | 30 | 30 | 30 | 30 | 30 | 30 | 30 | 30 | 30 | 30 |
| First-stage kneading | Surfactant | type | - | - | - | - | - | - | - | - | - | - | a-3 | a-5 | a-6 | - |
| | | addition amount | - | - | - | - | - | - | - | - | - | - | 2.5 | 2.5 | 2.5 | - |
| | | HLB | - | - | - | - | - | - | - | - | - | - | 6.5 | 12.5 | 14 | - |
| | Extender oil *2 | parts by mass | 30 | 30 | 30 | 30 | 30 | 30 | 30 | 30 | 30 | 30 | 30 | 30 | 30 | 30 |
| | Silica *3 | parts by mass | 70 | 70 | 70 | 70 | 70 | 70 | 70 | 70 | 70 | 70 | 70 | 70 | 70 | 70 |
| | Silane coupling agent *4 | parts by mass | 5. 6 | 5. 6 | 5. 6 | 5. 6 | 5.6 | 5. 6 | 5. 6 | 5. 6 | 5. 6 | 5.6 | 5. 6 | 5.6 | 5. 6 | 5.6 |
| | Stearic acid | parts by mass | 2 | 2 | 2 | 2 | 2 | 2 | 2 | 2 | 2 | 2 | 2 | 2 | 2 | 2 |
| | Antiaging agent *5 | parts by mass | 1 | 1 | 1 | 1 | 1 | 1 | 1 | 1 | 1 | 1 | 1 | 1 | 1 | 1 |
| | Zinc oxide | parts by mass | 3 | 3 | 3 | 3 | 3 | 3 | 3 | 3 | 3 | 3 | 3 | 3 | 3 | 3 |
| Second-stage kneading | Vulcanization accelerator 1 *6 | parts by mass | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 2 *7 | parts by mass | 1.8 | 1.8 | 1.8 | 1.8 | 1.8 | 1.8 | 1.8 | 1.8 | 1.8 | 1.8 | 1.8 | 1.8 | 1.8 | 1.8 |
| | Sulfur | parts by mass | 1.5 | 1.5 | 1.5 | 1.5 | 1.5 | 1.5 | 1.5 | 1.5 | 1.5 | 1.5 | 1.5 | 1.5 | 1.5 | 1.5 |
| Physical properties of formulation | MV(100°C) | index | 110 | 115 | 110 | 105 | 110 | 90 | 80 | 110 | 110 | 100 | 100 | 120 | 110 | 120 |
| | Filler incorporating rate | index | 110 | 130 | 120 | 120 | 110 | 100 | 90 | 110 | 105 | 110 | 100 | 110 | 115 | 115 |
| | Scorch characteristics | index | 110 | 105 | 100 | 100 | 100 | 100 | 100 | 100 | 90 | 85 | 100 | 95 | 80 | 100 |
| | tanδ (50°C) | index | 105 | 110 | 110 | 120 | 105 | 90 | 95 | 80 | 90 | 95 | 100 | 95 | 100 | 80 |

| | | | | | | | | | | | | | | | | |
|---|---|---|---|---|---|---|---|---|---|---|---|---|---|---|---|---|
| ∗ 1 : BR01, manufactured by JSR Corporation ∗ 2 : JOMO Process NC-140, manufactured by Japan Energy Corporation ∗ 3 : ZEOSIL 1165MP, manufactured by Rhodia ∗ 4 : Si75, manufactured by Evonik ∗ 5 : Ozonone 6C, N-(1,3-dimethylbuthyl)-N'-phenyl-p-phenylenediamine, manufactured by Seiko Chemical Co., Ltd. ∗ 6 : Nocceler D, 1,3-diphenylguanidine, manufactured by Ouchi Shinko Chemical Industrial Co., Ltd. ∗ 7 : Nocceler CZ, N-Cyclohexyl-2-benzothiazolylsulfenamide, manufactured by Ouchi Shinko Chemical Industrial Co., Ltd. | | | | | | | | | | | | | | | | |

As shown in Table 2, it was possible to obtain the polymer compositions being excellent in terms of processability and scorch resistance (Examples 1 to 5) by mixing the polymer solution containing the modified conjugated diene-based polymer and the surfactant having an HLB value of 9.0 or less and then removing the solvent from the mixed solution. In addition, the polymer compositions of Examples 1 to 5 had a fast filler incorporating rate and excellent productivity. Furthermore, the crosslinked rubbers produced using the polymer compositions of Examples 1 to 5, respectively, had excellent low fuel consumption performance.

In contrast, Comparative Examples 1 to 3 where the polymer compositions were produced in the same manner as in Examples 1 to 5 except that no surfactant was added to the polymer solutions and Comparative Examples 4 and 5 where surfactants having an HLB value of larger than 9.0 were used were poorer than Examples 1 to 5 in terms of at least any of the processability, the scorch resistance, the filler incorporating rate and the low fuel consumption performance. In addition, Comparative Example 9 where the terminal unmodified conjugated diene-based polymer was used was equivalent to Examples 1 to 5 in terms of the processability, the scorch resistance and the filler incorporating rate, but significantly poorer in terms of the low fuel consumption performance. Furthermore, Comparative Examples 6 to 8 where, instead of adding the surfactant to the polymer solution, the surfactants were blended at the time of the first-stage kneading were poor in terms of at least any of the scorch resistance and the low fuel consumption performance compared with Examples 1 to 5.

From the above-described results, it was clarified that, when the polymer solution containing the modified conjugated diene-based polymer and the surfactant having an HLB value of 9.0 or less are mixed together and the solvent is removed from the obtained mixed solution, it is possible to obtain a polymer composition being excellent in terms of processability, scorch resistance and productivity and to obtain a crosslinked rubber having excellent low fuel consumption performance.

## Claims

1. A rubber bale comprising:
a modified conjugated diene-based polymer; and
a surfactant having HLB of 9.0 or less.

2. The rubber bale according to claim 1, wherein the surfactant is at least one selected from the group consisting of a compound represented by formula (1), a compound represented by formula (2) and a compound represented by formula (3): 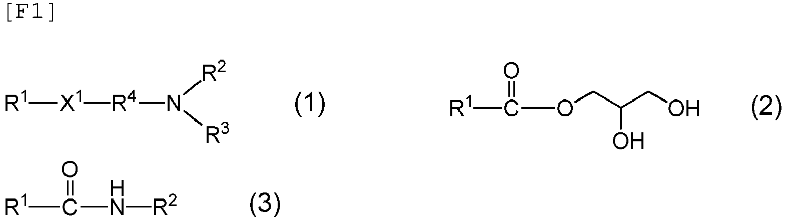 wherein R¹ is a hydrocarbyl group having 10 to 18 carbon atoms, and R² and R³ are each independently a hydrocarbyl group or -(R⁶O)ᵣ-H; R⁶ is an ethylene group or a propylene group, r is an integer of 1 or more, and in a case where r is 2 or more, a plurality of R⁶ is the same as or different from each other; X¹ is a single bond, an oxygen atom or -NR⁵-, and R⁴ is a single bond in a case where X¹ is a single bond, and is a hydrocarbylene group in a case where X¹ is an oxygen atom or -NR⁵-; and R⁵ is a hydrogen atom, a hydrocarbyl group or -(R⁶O)ᵣ-H.

3. The rubber bale according to claim 1 or 2, wherein 0.05 to 10 parts by mass of the surfactant is comprised per 100 parts by mass of the modified conjugated diene-based polymer.

4. The rubber bale according to any one of claims 1 to 3, wherein the modified conjugated diene-based polymer comprises a hydrocarbyloxysilyl group and a nitrogen-containing group at a polymer terminal.

5. The rubber bale according to any one of claims 1 to 4, wherein the surfactant comprises a propylene glycol chain.

6. The rubber bale according to any one of claims 1 to 5, wherein a weight-average molecular weight of the modified conjugated diene-based polymer is 1.0 × 10⁵ or more and 1.5 × 10⁶ or less.

7. The rubber bale according to any one of claims 1 to 6 that is for a tread or sidewall of a tire.

8. A method for producing a rubber bale, comprising:
a mixing step of mixing a polymer solution comprising a modified conjugated diene-based polymer dissolved in a solvent and a surfactant having HLB of 9.0 or less; and
a desolvation step of removing the solvent from a solution obtained by the mixing step.

9. The method for producing a rubber bale according to claim 8, wherein, in the mixing step, 0.05 to 10 parts by mass of the surfactant is blended with 100 parts by mass of the modified conjugated diene-based polymer.

10. The method for producing a rubber bale according to claim 8 or 9, wherein, in the desolvation step, the solution obtained by the mixing step is brought into contact with water to carry out desolvation.

11. The method for producing a rubber bale according to any one of claims 8 to 10, further comprising a step of reacting a conjugated diene-based polymer comprising an active terminal and a compound comprising a hydrocarbyloxysilyl group and a nitrogen-containing group to obtain the modified conjugated diene-based polymer.

12. The method for producing a rubber bale according to any one of claims 8 to 11, wherein the surfactant is at least one selected from the group consisting of a compound represented by formula (1), a compound represented by formula (2) and a compound represented by formula (3): 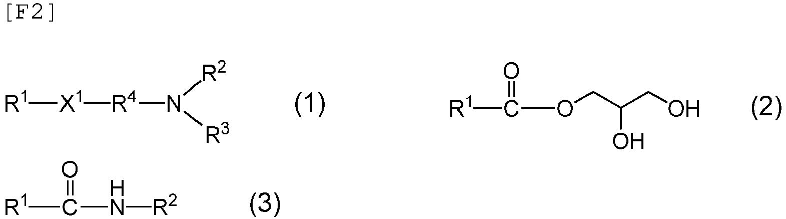 wherein R¹ is a hydrocarbyl group having 10 to 18 carbon atoms, and R² and R³ are each independently a hydrocarbyl group or -(R⁶O)ᵣ-H; R⁶ is an ethylene group or a propylene group, r is an integer of 1 or more, and in a case where r is 2 or more, a plurality of R⁶ is the same as or different from each other; X¹ is a single bond, an oxygen atom or -NR⁵-, and R⁴ is a single bond in a case where X¹ is a single bond, and is a hydrocarbylene group in a case where X¹ is an oxygen atom or -NR⁵-; and R⁵ is a hydrogen atom, a hydrocarbyl group or -(R⁶O)ᵣ-H.

13. A polymer composition that the rubber bale according to any one of claims 1 to 7 is blended with at least one reinforcing filler selected from the group consisting of silica, carbon black and an inorganic compound represented by formula (4):
nM¹·mSiOₖ·iH₂O ... (4)
wherein M¹ is at least one selected from the group consisting of a specific metal that is any of aluminum, magnesium, titanium and calcium, an oxide of the specific metal, a hydroxide of the specific metal, a hydrate of an oxide of the specific metal and a hydrate of a hydroxide of the specific metal; n is an integer of 1 to 5; m is an integer of 0 to 10; k is an integer of 2 to 5; and i is an integer of 0 to 10.

14. A crosslinked product that is obtained using the polymer composition according to claim 13.

15. A tire, wherein either or both of a tread and a sidewall are formed of the polymer composition according to claim 13.
